# EUROPEAN PATENT SPECIFICATION

(11) **EP 1 622 752 B1**
(45) Date of publication and mention of the grant of the patent: **03.07.2013**
(21) Application number: 03727949.4
(22) Date of filing: 14.05.2003
(51) Int. Cl.: B29C 33/42, B29C 33/76, B29C 43/02, B29C 33/30

(54) **MOULD AND METHOD FOR THE MANUFACTURE OF A BRAKING BAND OF COMPOSITE MATERIAL, WITH VENTILATION DUCTS**
FORMWERKZEUG UND HERSTELLUNGSVERFAHREN FÜR EIN BREMSBAND AUS VERBUNDWERKSTOFF MIT BELÜFTUNGSKANÄLEN
MOULE ET PROCEDE DE PRODUCTION D'UNE BANDE DE FREINAGE EN MATIERE COMPOSITE, COMPRENANT DES CONDUITS DE VENTILATION

(43) Date of publication of application: 08.02.2006
(73) Proprietor: Freni Brembo S.p.A., 24035 Curno (Bergamo) (IT)
(72) Inventor: PACCHIANA, Giovanni, Paolo, I-24036 Locate (IT); MAURI, Bernardino, I-23900 Lecco (IT); BONFANTI, Roberto, I-24020 Scanzorosciate (Bergamo) (IT)
(74) Representative: Crippa, Paolo Ernesto
(86) International application number: PCT/IT2003/000286
(87) International publication number: WO 2004/101249

(56) References cited:
- WO-A-03/012310
- WO-A-03/012311
- US-B1- 6 328 834
- US-B1- 6 450 303
- PATENT ABSTRACTS OF JAPAN vol. 007, no. 133 (M-221), 10 June 1983 (1983-06-10) & JP 58 049545 A (TAKAOKA KOGYO KK), 23 March 1983 (1983-03-23)

## Description

This invention relates to a mould for a braking band and a method for manufacturing a braking band using that mould; in particular, this invention relates to a mould for manufacturing a braking band of ceramic material, provided with a pin drive and having ventilation ducts which extend along the braking band. WO03/012310 describes a process for the production of braking bands comprising the steps of moulding a metallic core, inserting the core in a mould, filling the mould with at least two layers to form the braking band, first heating of the mould in order to harden the two layers, second heating in order to fuse the core, and collecting the molten core.
US6450303 describes a brake disc with a bowl-shaped brake-disc chamber having a wall region and a bottom region and with a disc-shaped friction ring surrounding the brake disc chamber coaxially with respect to a common mid-axis, the friction ring having, on its inner circumference, clearances, into which projections formed on the wall region of the brake disc chamber engage for the play-free transmission of a torque acting on the friction ring to the brake-disc chamber.
US6328834 describes a process for producing bodies of fiber-reinforced composites, comprising the steps of mixing fibers, fiber bundles or fiber agglomerates to form a pressing composition, introducing at least one silicon-containing core, pressing the pressing composition to form a green body, melting the at least one silicon-containing core.
JP58 049545 describes a disc-brake-rotor and manufacturing method thereof, in which sliding parts of a rotor are concentrically connected to each other by a plurality of radially disposed ribs between which a plurality of radial air supply openings are provided and opened at an inner peripheral face and an outer peripheral face.

As is known, brake discs include a braking band manufactured from a temperature-and-wear resistant material, preferably of the ceramic type, and a hub connecting the braking band to the wheel hub together with which it rotates as one piece. The connection between the braking band and the brake hub is for example provided through pins present on the outer periphery of the hub and passing through suitable holes provided in the braking band so as to make the brake hub and the braking band rotate as one piece. Between the pins there are also recesses in fluid communication with the ventilation ducts to permit a flow of cooling fluid within the braking band.

Linking of the recesses in the braking band with a circular reinforcing plate positioned on one leaf of the braking band in order to stiffen the structure of the braking band so as to prevent the occurrence of cracks in the attachment zone between the braking band and the hub is known.

Manufacture of a solid braking band, that is without recesses, and then removing material by mechanical machining, for example milling, so as to create the recesses, at the same time leaving a thickness of disc which constitutes the reinforcing band, in order to achieve this structure for the braking band, is known.

This solution is however extremely slow and costly and requires the use of high precision machine tools to produce the recesses and the reinforcing plate from the solid.

These disadvantages and limitations are overcome by a mould for a braking band according to Claim 1 and a method for manufacturing a braking band according to Claim 17.

Particular embodiments of the invention are the subject of the respective dependent claims.

Other advantages and characteristics of the present invention will become clear from the following detailed description which is given with reference to the appended drawings which are provided purely by way of non-limiting example and in which:

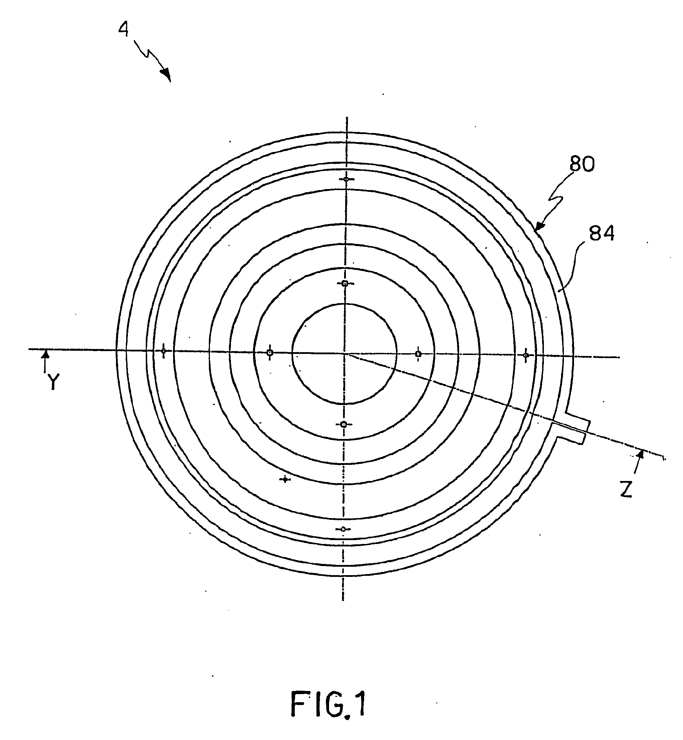

Figure 1 shows a mould according to the invention in plan view from above,

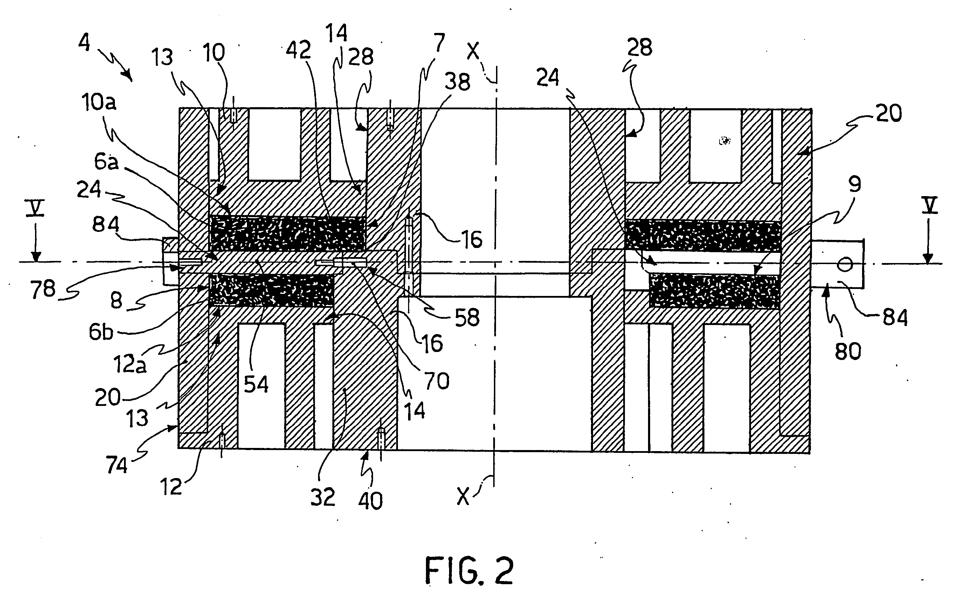

Figure 2 shows a cross-sectional view of the mould in Figure 1 along the axis Y-Z in Figure 1, in an operating condition of the mould,

Figure 3 shows another cross-sectional view of the mould in Figure 1 along the axis Y-Z in Figure 1, in another operating condition of the mould,

Figure 4 shows another cross-sectional view of the mould in Figure 1 along the axis Y-Z in Figure 1 in another operating condition of the mould,

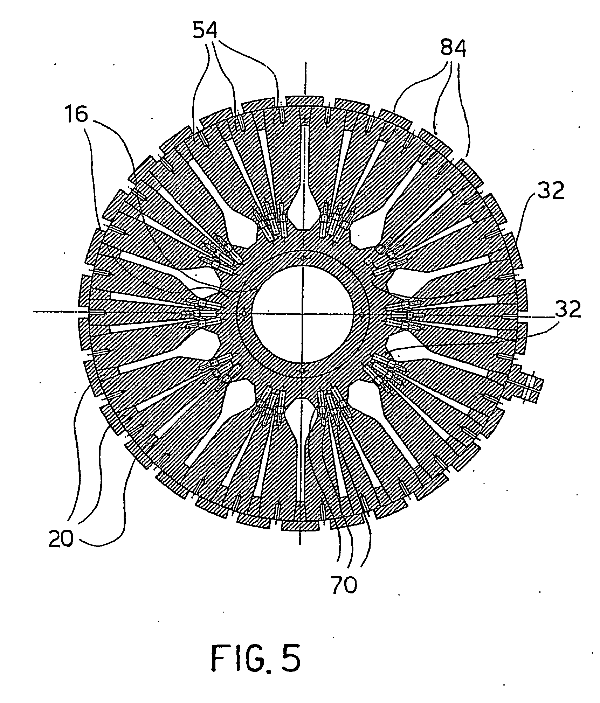

Figure 5 shows a cross-sectional view of the mould in Figure 2 along the axis v-v in Figure 2,

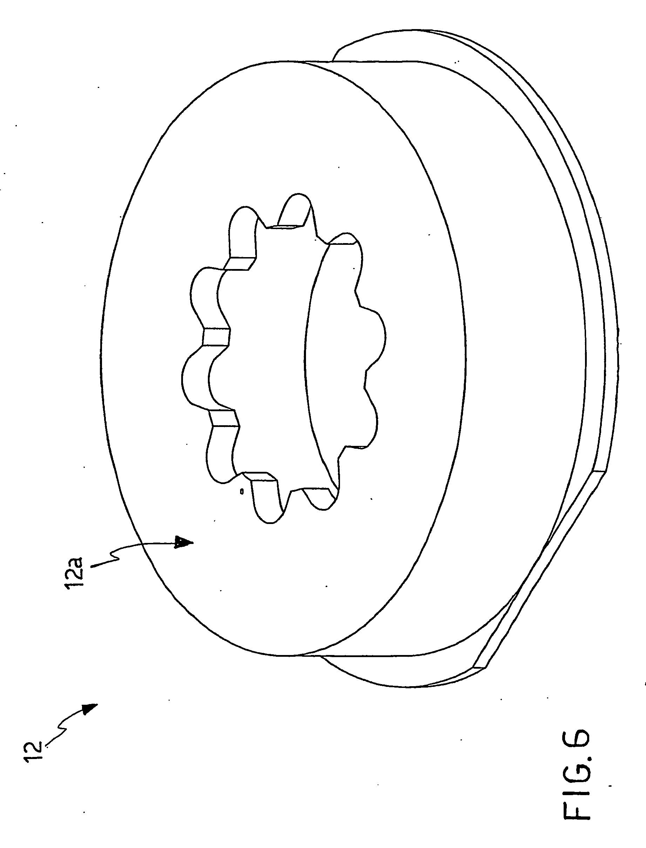

Figure 6 shows a perspective view of a detail of the mould in Figure 1,

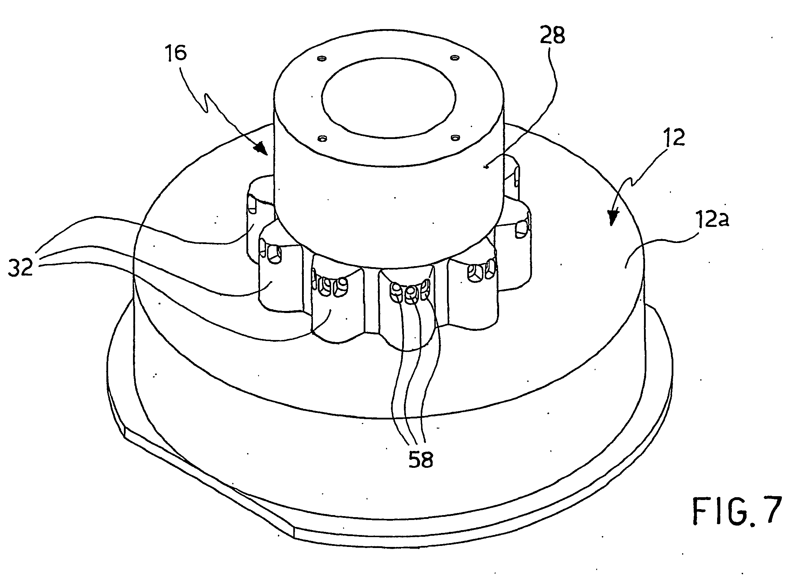

Figure 7 shows a perspective view of another detail of the mould in Figure 1,

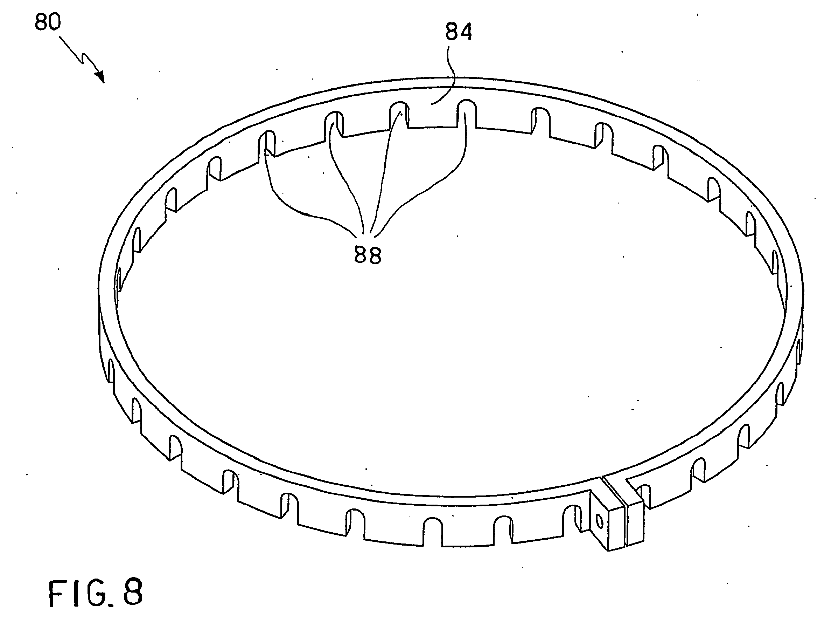

Figure 8 shows a perspective view of another detail of the mould in Figure 1,

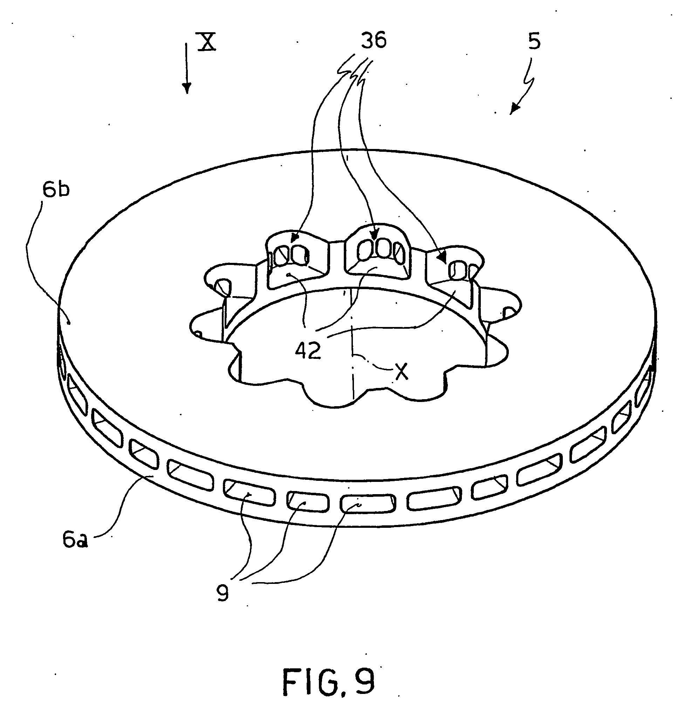

Figure 9 shows a perspective view of a braking band obtained using the mould in Figure 1,

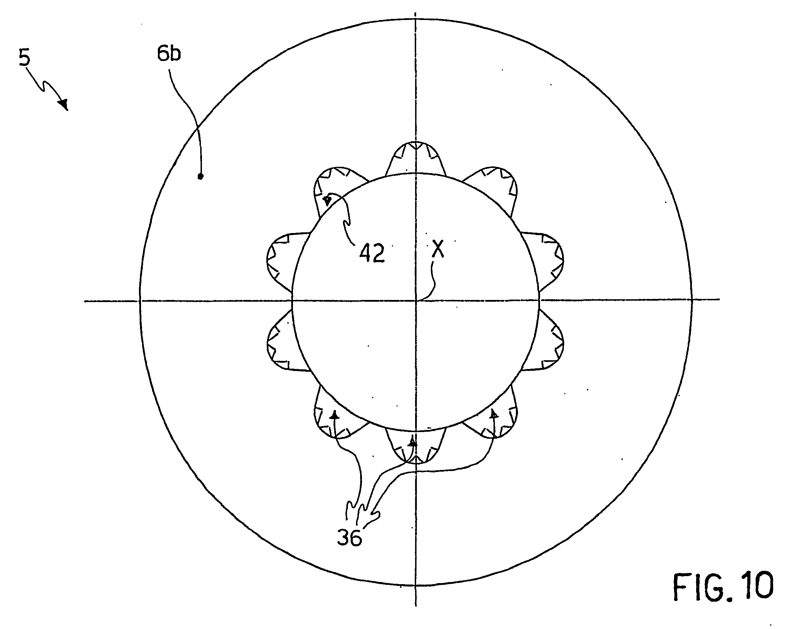

Figure 10 shows a plan view of the braking band in Figure 9 on the side of arrow X in Figure 9.

Components or parts of components which are common to the embodiments described below will be indicated using the same numerical references.

With reference to the aforesaid figures, 4 generically indicates a mould for forming braking bands 5 with ventilation ducts, preferably of composite material. Said braking bands 5 comprise two rotor plates 6A, 6B with a predetermined axis X, which have radially an inner edge 7 and an outer edge 8, and a predetermined thickness and are separated by ventilation ducts 9 which extend from outer edge 8 to inner edge 7.

In what follows, by the term axial direction is meant a direction substantially parallel to the said X axis which identifies an axis of rotation of the braking band 5 of a disc brake which in a configuration when fitted on a hub rotates as one piece with the said hub.

By the term radial direction is meant a direction substantially perpendicular to the X axis and directed along a radius of the braking band.

Said mould 4 comprises an upper half-shell 10 and a lower half-shell 12. Each of the two half-shells comprises an impressing surface, 10A and 12A respectively, the said impressing surfaces 10A and 12A facing each other and lying substantially perpendicular with respect to the axis X. Said impressing surfaces 10A and 12A have a substantially circular ring shape and extend about axis X. Said half-shells 10, 12 have a substantially annular shape with an outer periphery 13 corresponding to the said outer edge 8 and an inner periphery 14 corresponding to the said inner edge 7. At least one of the said half-shells 10, 12 can be moved by corresponding actuating means, not shown, along the X axis towards the other half-shell 12, 10 respectively.

According to one embodiment, activating means are associated with upper half-shell 10 which exert the force necessary to move upper half-shell 10 along the X axis and to provide the desired pressure for forming braking band 5. For example, the said actuating means comprise at least one hydraulic piston/cylinder unit together with a hydraulic circuit.

Mould 4 comprises inner 16 and outer 20 containment means suitable for bounding the inner edge 7 and the outer edge 8 respectively of braking band 5.

Inner and outer containment means 16, 20 bound a forming cavity 24 through the two half-shells 10, 12. Said forming cavity 24 preferably has a substantially cylindrical shape and is symmetrical with respect to the axis of symmetry X, in particular shaping cavity 24 has the shape of braking band 5 which has to be formed. Inner containment means 16 comprise a lateral inner wall 28 which bounds the inner edge 7 of braking band 5.

Advantageously inner containment means 16 comprise shaping elements 32, located circumferentially along the said inner side wall 28, which project perpendicular to axis X from said inner side wall 28 so as to produce corresponding recesses 36 in the inner edge 7 of braking band 5.

Shaping elements 32 are bounded along the X axis by a first axial extremity 38 and a second axial extremity 40 in such a way that in the configuration in which mould 4 is closed, in which impressing surfaces 10A, 12A are at a distance along the X axis which is substantially equal to the final thickness of braking band 5, only one of the said first and second axial extremities 38, 40 of the said shaping elements 32 project within forming cavity 24 and act together with the said impressing surfaces 10A, 12A to form said braking band 5.

Preferably said shaping elements 32 extend from said inner side wall 28 over a length less than the distance between the said inner edge 7 and the said outer edge 8 of resulting braking band 5. In other words shaping elements 32 project from inner side wall 28, corresponding to inner edge 7, towards outer edge 8 over a length less than a radius of braking band 5.

Preferably, one thickness of said shaping elements 32, measured along the X axis, is greater than the distance between impressing surfaces 10A, 12A of half-shells 10, 12 in the configuration in which the mould is closed. In other words shaping elements 32 extend axially, that is along the X axis, over a length greater than the distance between the said impressing surfaces 10A, 12A.

According to one embodiment, shaping elements 32 of specified dimensions along the direction of the X axis which enters within the final thickness of braking band 5 in the course of manufacture by an amount less than the distance between impressing surfaces 10A, 12A of half-shells 10, 12 in a configuration in which the mould is closed.

According to one embodiment, said shaping members 32, in the configuration in which the mould is closed, penetrate axially into forming cavity 24 only partly so as to create an undercut in corresponding braking band 5.

In other words, shaping elements 32, in the condition in which the mould is closed, cut into an axial portion of braking band 5 along the X axis which is less than the final thickness of braking band 5 so as to manufacture a braking band 5 in which there is a circumferential plate 42 which substantially projects away from recesses 36 generated by shaping elements 32 at the inner edge 7 of a leaf 6A. Said circumferential plate 42 has an axial thickness which is substantially equal to the difference between the final thickness of braking band 5 and the axial portion of shaping elements 32 which cut into braking band 5.

Preferably, in the configuration in which the mould is closed, shaping elements 32 cut into an axial portion of braking band 5 along the X axis which is substantially equal to the thickness of a plate 6B and ventilation ducts 9, so as to manufacture a braking band 5 in which plate 6A, which is not affected by said shaping elements 32 on outer edge 7, comprises circumferential plate 42 which substantially projects away from recesses 36 of opposite plate 6B which is cut into by shaping elements 32.

Circumferential plate 42 is advantageously shaped for receiving an annular portion of a hub, not shown, which can be associated with said braking band 5 to abut against it, the said hub combining braking band 5 with a wheel hub, not shown, so that they rotate together as one piece.

According to one embodiment, shaping elements 32 are of one piece with the inner side wall 28 of inner containment means 16.

According to another embodiment, said shaping elements 32 can be associated with inner side wall 28. For example they may constitute the ribs which may be associated with inner side wall 28 through threaded connections; for example inner side wall 28 may also comprise channels directed along the X axis shaped to receive the said shaping elements, helping to position them on side wall 28 and subsequently to secure them.

Advantageously shaping elements 32 comprise supporting elements for at least one core 54 which is designed to provide a ventilation duct 9 which extends from outer edge 8 to inner edge 7 of braking band 5.

According to one embodiment, at least one shaping element 32 comprises a housing 58 designed to receive a portion of at least one core 54 which extends from outer edge 8 to inner edge 7 in such a way as to produce a ventilation duct 9 in braking band 5.

According to another embodiment, at least one shaping element 32 comprises at least one housing 58, each housing 58 being designed to receive a portion of a core 54 which extends from outer edge 8 to inner edge 7 in such a way as to form ventilation ducts 9 in braking band 5. Each housing 58 may be located substantially radially with respect to the said X axis, or it may be located substantially in a direction which does not coincide with the said X axis.

Advantageously, inner periphery 14 of one of said half-shells 12 is negatively shaped with respect to said inner side wall 28 and said shaping elements 32 of inner containment means 16. In other words, the inner periphery 14 of lower half-shell 12 comprises a hole having a diameter which is substantially equal to the diameter of inner side wall 28 in such a way as to permit relative motion between inner containment means 16 and lower half-shell 12, and also comprises recesses which are substantially negatively shaped with respect to corresponding shaping elements 32 with which they mate.

Advantageously, said shaping elements 32 are distributed substantially uniformly with a constant spacing along said inner side wall 28.

Shaping elements 32 may have various shapes. According to one embodiment said shaping elements 32 have a substantially segmented cross-section with respect to a section plane perpendicular to the said X axis; in another embodiment said shaping elements 32 have a substantially polygonal cross-section with respect to a section plane perpendicular to the said X axis.

Preferably mould 4 also comprises cores 54 which are designed to form said ventilation ducts 9. The cores can be transferred from a resting position in which they do not interfere with said forming cavity 24 and a working position in which they cut into said forming cavity 24 alternately. Advantageously, cores 54 have a posterior end 62 and an anterior end 66 which is tapered with respect to posterior end 62. In the working position said posterior end 62 is positioned on outer edge 8 and said anterior end 66 is positioned on inner edge 7 in such a way as to allow cores 54 to move from the resting position to the working position and vice versa.

Advantageously, in the working position, cores 54 are inserted into forming cavity 24, extending from outer containment means 20 to inner containment means 16, and are substantially constantly spaced in a circumferential direction of forming cavity 24.

According to one embodiment, cores 54 are substantially straight and are located radially with respect to the said X axis, forming ventilation ducts 9 which are substantially straight and radial in braking band 5. According to another embodiment, cores 54 extend in a substantially straight direction and are inclined with respect to the direction radial to the X axis, forming ventilation ducts 9 which are substantially straight and inclined with respect to the direction radial to the X axis in braking band 5. Said cores 54 may also have a substantially curved shape, so as to form curved ventilation ducts 9 in braking band 5.

Preferably cores 54 have a transverse cross-section which tapers from outer edge 8 to inner edge 7 in such a way as to form ventilation ducts 9 which taper from outer edge 8 towards inner edge 7.

Preferably, at said anterior end 66, cores 54 comprise a segment 70 which is designed to be housed in said housings 58 in shaping elements 32 of inner containment means 16.

Advantageously, outer containment means 20 comprise openings 78 along an outer side wall 74 designed to be traversed by said cores 54 to permit cores 54 to move from the working position to the resting position.

Advantageously, mould 4 comprises a retaining. member 80 which is capable of acting together with outer containment means 20 to hold said cores 54 in the working position.

Preferably said retaining member 80 comprises a circumferential ring 84 capable of surrounding said outer containment means 20 and having holes 88 designed to provide an interlocking connection with said posterior ends 62 of cores 54. Advantageously, said inner containment means 16 are operatively connected to actuating means, not shown, capable of moving said inner containment means 16 along the X axis. Advantageously, said outer containment means 20 are operatively connected to actuating means, not shown, capable of moving said outer containment means 20 along the X axis.

According to one embodiment mould 4 is manufactured of aluminium or aluminium alloy.

According to another embodiment, mould 4 also comprises heating means, not shown, such as, for example electrical resistances and the like.

The operation of the mould for braking bands of composite material with ventilation ducts will now be described, as well as the procedure for forming braking bands through use of the aforesaid forming mould according to the invention.

At the start of a forming cycle, the two half-shells 10, 12 are away from each other and forming cavity 24 is accessible from the exterior. Cores 54 are in a resting position, that is outside forming cavity 24.

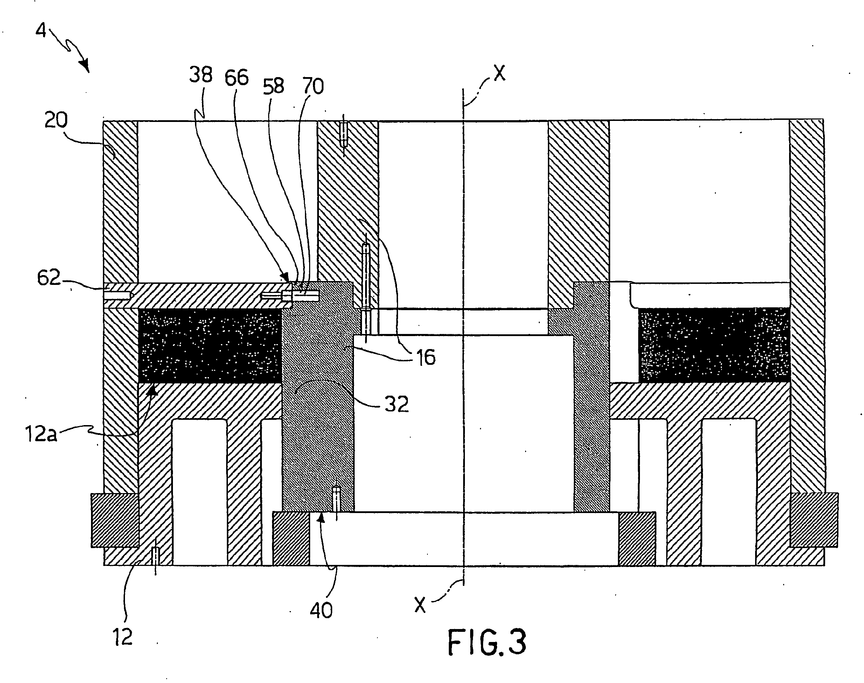

At least three cores are inserted, for example at 120° along outer side wall 74 to cause the anterior ends 66 of the cores to enter corresponding housings 58 in inner containment means 16, so as to ensure correct centering or coaxiality between inner containment means 16 and outer containment means 20. While lower half-shell 10 remains fixed in position, resting on a suitable base, inner containment means 16 and outer containment means 20 held together radially by cores 54 are moved upwards, that is away from the said base, by an amount which depends on the predetermined thickness of the braking band which has to be manufactured. On the side facing inner containment means 16 outer containment means 20 are lined with suitable means, such as for example metal strips, to prevent leakage of the composite material, and the interior of forming cavity 24 is filled with a mixture of composite material up to the position of the already inserted cores 54, as illustrated in Figure 3.

Said mixture of material preferably comprises bundles of filaments made essentially of carbon, which are cut to length so as to have a length of less than 30 mm. These materials are mixed with an aggregating resin, such as for example polyurethane or more preferably a phenolic resin and other additives.

All the remaining cores 54 are inserted and retaining members 80 are fitted to the posterior ends 62 of cores 54 projecting from outer side wall 74, for example by inserting the said posterior ends into said holes 88 in such a way as to engage outer containment means 20 to retain said cores 54 in their relative position.

The inner and outer containment means are released so that these can compact the material already poured into forming cavity 24 through their own weight and forming cavity 24 is further filled until the desired quantity of material according to the predetermined thickness of braking band 5 is reached.

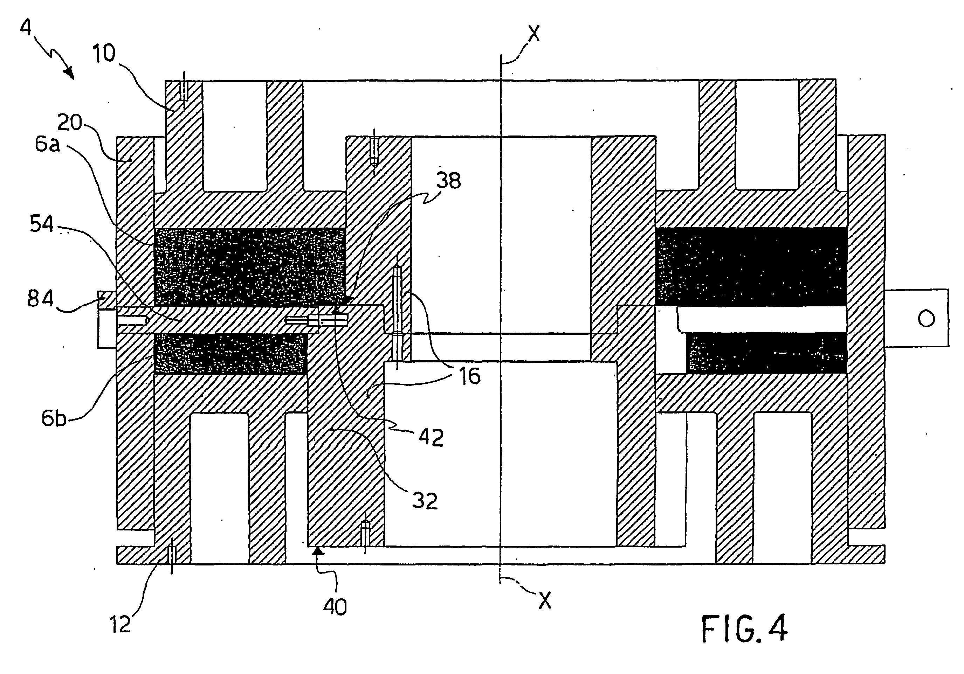

Upper half-shell 10 forming the cover of the mould is then positioned as illustrated in Figure 4, mould 4 is closed through connection of the two half-shells 10, 12, and the stage of forming braking band 5 is performed.

The stage of forming the braking band requires a predetermined pressure, predetermined heating and means to determine the final shape of the braking band.

Actuating means act on upper half-shell 10 which moves towards lower half-shell 12 exerting a predetermined pressure on the mixture of material suitable for forming braking band 5. Impressing surfaces 10A, 12A of corresponding half-shells 10, 12 define the shape of braking band 5 which is to be formed, together with inner 16 and outer 20 containment means.

Means for heating the mould are also provided in order to achieve temperature conditions suitable for forming. According to one embodiment of mould 4, mould 4 is inserted between two plates of a hydraulic press in which the said plates are provided with electrical resistances for heating.

During the stage of forming braking band 5 using mould 4 the mixture of material within forming cavity 24 is heated to a temperature of between 80°C and 180°C, preferably between 100°C and 150°C, and is subjected to a pressure of between 0.1 N/cm² and 5 N/cm², preferably of between 0.5 N/cm² and 1.0 N/cm².

When forming is complete, retaining members 80 are removed and the cores are withdrawn, returning them to the resting position, in such a way as to free up the ventilation ducts formed. This removal of the pins is made easier as a result of the shape of their transverse cross-section, which tapers from posterior end 62 towards anterior end 66.

Mould 4 is opened by moving upper half-shell 10 away from lower half-shell 12, and the semi-finished braking band is expelled from the mould.

The semi-finished braking band 5 can then be subjected to further processing. For example, semi-finished braking band 5 is subjected to a first firing in a furnace at a temperature such as to cause carbonization or pyrolysis of the resin. This firing is carried out in a conventional furnace at a temperature which depends on the type of binder used and which generally lies between 900°C and 1200°C. Firing is effected in the presence of a flow of inert gas such as nitrogen or argon, and under an excess pressure of 10-100 mbar.

During this stage of the process the material of the semi-finished braking band acquires greater porosity which is important for subsequent firing during which fused silicon seeps into it.

According to one embodiment, the process may further include a stage of finishing of the surface of the semi-finished band obtained by pyrolysis. This makes it possible to remove any surface deformations from the braking band using conventional equipment.

Braking band 5 is then subjected to a second firing in the presence of silicon at a temperature such as to cause melting of the loose silicon and to cause it to seep into the pores of the braking band. The fused silicon partly reacts with the carbon in the semi-finished braking band to form silicon carbides which have the effect of improving the cohesion characteristics of the material.

At the end of silicification the braking band is cooled for example with argon or nitrogen.

Finally the braking band with ventilation ducts can be subjected to further finishing operations, for example surface finishing, which can be carried out dry or wet.

As will be seen from what has been described, the mould described makes it possible to overcome the disadvantages presented by moulds of the known art.

In fact the mould described makes it possible to manufacture a braking band with ventilation ducts, recesses in fluid communication with the said ducts and a reinforcing plate for the braking band in a single moulding operation and without any assistance from machine tools.

The process of forming the braking band is particularly fast and economical.

The existence of a single mould for manufacturing the braking band without any assistance from machine tools makes manufacture easily repeatable and controllable and thus increases the quality of the final product.

Finishing of the braking band by mechanical machining only affects the outer surfaces and can easily be inspected. This reduces the number of invisible edges or cracks and therefore the risk of brittle fracture of the braking band.

Waste is reduced because the recesses are produced directly within the mould and are not excavated from the solid.

Naturally, the principle of the invention remaining the same, the forms of embodiment and details of construction may be varied widely with respect to those described and illustrated, which have been given purely by way of example, without thereby departing from the scope of the invention as defined by the appended claims.

## Claims

1. A mould (4) for forming braking bands (5) of composite material having two rotor plates (6A, 6B) having a predetermined axis (X), the said plates (6A, 6B) having radially an inner edge (7) and an outer edge (8), having a predetermined thickness and being separated from each other by ventilation ducts (9) which extend from the outer edge (8) to the inner edge (7), the said mould (4) comprising
- an upper half-shell (10) and a lower half-shell (12), each of the said half-shells (10, 12) having an impressing surface (10A, 12A), the said impressing surfaces (10A, 12A) facing each other and lying substantially perpendicular with respect to the said axis (X), at least one of the said half-shells (10, 12) being suitable of being moved by corresponding actuating means along the said axis (X) towards the other half-shell (12, 10) respectively,
- inner (16) and outer (20) containment means suitable for bounding the inner edge (7) and the outer edge (8) respectively of the braking band (5), said inner and outer containment means (16, 20) bounding together with the half-shells (10, 12) a forming cavity (24) having the shape of the braking band (5) which has to be formed, in which
the said inner containment means (16) comprise an inner side wall (28) bounding the said inner edge (7) and shaping elements (32) located circumferentially along the said inner side wall (28), which project out from the inner side wall (28) perpendicularly to the said axis (X) to form corresponding recesses (36) in the inner edge (7) of the braking band (5), the said shaping elements (32) being bounded along the axis (X) by a first and a second axial extremity (38, 40) in the configuration in which the mould (4) is closed, in which the said impressing surfaces (10A, 12A) are at a distance along the axis (X) which is substantially equal to the final thickness of the braking band (5), only one of the said first and second axial extremities (38, 40) of the said shaping elements (32) projects within the forming cavity (24) and acts together with the said impressing surfaces (10A, 12A) to form the said braking band (5).

2. A mould according to Claim 1, in which the said shaping elements (32) extend from the said inner side wall (28) over a length less than the distance between the said inner edge (7) and the said outer edge (8).

3. A mould according to Claims 1 or 2, in which one thickness of the said shaping elements (32) measured along the axis (X) is greater than the distance between the impressing surfaces (10A, 12A) of the two half-shells (10, 12) in a configuration in which the mould (4) is closed.

4. A mould according to any one of the preceding claims, in which the said shaping elements (32) in a configuration in which the mould (4) is closed axially penetrate the forming cavity (24) only partly to create an undercut in the corresponding braking band (5) and/or wherein
the said shaping elements (32), in a condition in which the mould (4) is closed, cut into an axial portion of the braking band (5) which is less than the final thickness of the braking band (5) along the axis (X) in such a way as to produce a braking band (5) in which there is a circumferential plate (42) which substantially projects with respect to the recesses (36) produced by the shaping elements (32) on the inner edge (7) of a plate (6A), the said circumferential plate (42) having an axial thickness substantially equal to the difference between the final thickness of the braking band (5) and the axial portion of the shaping elements (32) which cut into the braking band (5) and/or wherein the said shaping elements (32), in a configuration in which the mould (4) is closed, cut into an axial portion of the braking band (5) which is substantially equal to a plate (6B) and the ventilation ducts (9) along the axis (X) in such a way as to produce a braking band (5) in which the plate (6A) which is unaffected by the said shaping elements (32) has along the inner edge (7) a circumferential plate (42) which substantially projects away from the recesses (36) of the opposite plate (6B) affected by the shaping elements (32).

5. A mould according to Claim 4, in which an annular portion of a hub which is associated with the said braking band (5) abuts the said circumferential plate (42), the said hub rotationally firmly connecting the braking band (5) with a wheel hub.

6. A mould according to any one of the preceding claims, in which the said shaping elements (32) are of one piece with the said inner side wall (28) and/or wherein
the said shaping elements (32) is associated with the said inner side wall (28) and/or wherein
the said shaping elements (32) comprise supporting elements for at least one core (54) capable of producing a ventilation duct (9) which extends from the outer edge (8) to the inner edge (7) of the braking band (5).

7. A mould according to any one of the preceding claims, in which at least one shaping element (32) comprises a housing (58) for receiving a portion of at least one core (54) which extends from the outer edge (8) to the inner edge (7) to provide a ventilation duct (9) in the braking band (5) and/or wherein
at least one shaping element (32) comprises at least one housing (58), each housing receiving a portion of the core (54) which extends from the outer edge (8) to the inner edge (7) to form ventilation ducts (9) in the braking band (5).

8. A mould according to Claim 7, in which the said housing (58) is located substantially radially with respect to the said axis (X) and/or wherein
the said housing (58) is located substantially in a direction which does not coincide with the said axis (X).

9. A mould according to any one of the preceding claims, in which the said half-shells (10, 12) have a substantially annular shape with an outer periphery (13) corresponding to the said outer edge (8) and an inner periphery (14) corresponding to the said inner edge (7).

10. A mould according to Claim 9, in which the inner periphery (14) of one of the said half-shells (10, 12) is shaped with a shape complementary to said inner side wall (28) and said shaping elements (32) of the inner containment means (16).

11. A mould according to any one of the preceding claims, in which the said shaping elements (32) are distributed substantially uniformly with a constant spacing along the said inner side wall (28) and/or wherein
the said shaping elements (32) have substantially a segmented cross-section with respect to a section plane perpendicular to the said axis (X) and/or wherein
the said shaping elements (32) have a substantially polygonal cross-section with respect to a section plane perpendicular to the said axis (X).

12. A mould according to any one of the preceding claims, comprising cores (54) for producing ventilation ducts (9), the said cores (54) being suitable to be transferred alternately from a resting position in which they do not interfere with the said forming cavity (24) and a working position in which they cut into the said forming cavity (24) and/or wherein
the said cores (54) have a posterior end (62) and an anterior end (66), which is tapered with respect to the posterior end (62), the said posterior end (62) being positioned in the working position at the outer edge (8) and the said anterior end (66) being positioned at the inner edge (7) in such a way as to favour movement of the cores (54) from the resting position to the working position and vice versa and/or wherein
in the working position the cores (54) are inserted into the forming cavity (24), extending from the outer containment means (20) to the inner containment means (16), and are distributed with a substantially constant spacing in a circumferential direction of the said forming cavity (24) and/or wherein
the said cores (54) are substantially straight and positioned radially with respect to the said axis (X), forming substantially straight and radial ventilation ducts (9) in the braking band (5) and/or wherein
the said cores (54) extend in a substantially straight and inclined direction with respect to the radial direction to the axis (X), forming ventilation ducts (9) which are substantially straight and inclined with respect to the radial direction to the axis (X) in the braking band (5) and/or wherein
the said cores (54) have a substantially curved shape, forming curved ventilation ducts (9) in the braking band (5) and/or wherein
the said cores (54) have a transverse cross-section which tapers from the outer edge (8) to the inner edge (7) in such a way as to form ventilation ducts (9) which taper from the outer edge (8) to the inner edge (7). and/or wherein
the said anterior end (66) the said cores (54) comprise a pin (70) which is housed in the said housings (58) of the shaping elements (32) of the internal containment means (16).

13. A mould according to any one of the preceding claims, in which the said outer containment means (20) comprise openings (78) along an outer side wall (74) suitable to be traversed by the said cores (54) for moving the cores (54) from the working position to the resting position.

14. A mould according to any one of the preceding claims, comprising a retaining member (80) acting together with the said outer containment means (20) to hold the said cores (54) in the working position and/or wherein
the said retaining member (80) comprises a circumferential ring (84) surrounding the said outer containment means (20) and having holes (88) providing an interlocking connection with the said posterior ends (62) of the cores (54) and/or wherein
the said inner containment means (16) are operatively connected to activating means moving the said inner containment means (16) along the axis (X) and/or wherein the said outer containment means (20) are operatively connected to activating means for moving the said outer containment means (20) along the axis (X).

15. A mould according to any one of the preceding claims, made of aluminium or aluminium alloys and/or comprising heating means and/or wherein the said heating means comprise electrical resistances.

16. A mould according to any one of claims from 1 to 15, in which the said shaping elements (32) have a portion with a dimension determined in the direction of the axis (X) entering within the overall thickness of the braking band (5) to be manufactured by an amount less than the distance between the impressing surfaces (10A, 12A) of the two half-shells (10, 12) in a configuration in which the mould (4) is closed.

17. A method for manufacturing a braking band (5) of composite material and having ventilation ducts (9), comprising the stages of:
- providing a mould (4) according to any one of claims from 1 to 16, the said mould (4) being provided with cores (54) designed to produce ventilation ducts (9),
- filling the interior of the forming cavity (24) of the mould (4) with a mixture of a composite material up to the position of the said cores (54) designed to produce the ventilation ducts (9),
- transferring the cores (54) from the resting position to the working position,
- positioning a retaining member (80, 84) for the cores (54),
- further filling of the interior of the forming cavity (24) with the mixture of composite material,
- closing the mould (4),
- forming of the said braking band (5) by applying a predetermined pressure and temperature,
- expelling the braking band (5) from the mould (4).

18. A method according to Claim 17, also comprising the stage of pyrolysis of the braking band (5) and/or comprising the stage of silicification of the braking band (5) and/or
comprising one or more stages of mechanical finishing of the external surfaces of the braking band (5).

## Patentansprüche

1. Formwerkzeug (4) zum Formen von Bremsbändern (5) aus Verbundmaterial mit zwei Rotorplatten (6A, 6B) mit einer vorbestimmten Achse (X), wobei die Platten (6A, 6B) radial einen Innenrand (7) und einen Außenrand (8) aufweisen, eine vorbestimmte Dicke haben und durch Belüftungskanäle (9) voneinander getrennt sind, die sich von dem Außenrand (8) zum Innenrand (7) erstrecken, wobei das Formwerkzeug (4) umfasst:
- eine obere Halbschale (10) und eine unter Halbschale (12), wobei jede der Halbschalen (10, 12) eine Pressfläche (10A, 12A) aufweist, wobei die Pressflächen (10A, 12A) aufeinander zuweisen und im Wesentlichen senkrecht in Bezug auf die Achse (X) liegen, wobei zumindest eine der Halbschalen (10, 12) dazu geeignet ist, durch entsprechende Betätigungsmittel entlang der Achse (X) jeweils zu der anderen Halbschale (12, 10) bewegt zu werden,
- innere (16) und äußere (20) Aufnahmemittel, die dazu geeignet sind, jeweils den Innenrand (7) und den Außenrand (8) des Bremsbands (5) zu begrenzen, wobei die inneren und äußeren Aufnahmemittel (16, 20) zusammen mit den Halbschalen (10, 12) einen Formhohlraum (24) begrenzen, der die Gestalt des zu formenden Bremsbands hat, worin die inneren Aufnahmemittel (16) eine innere Seitenwand (28) aufweisen, die den Innenrand (7) begrenzt, sowie Formungselemente (32), die umfangsmäßig entlang der inneren Seitenwand (28) angeordnet sind und von der inneren Seitenwand (28) senkrecht zu der Achse (X) vorstehen, um entsprechende Vertiefungen (36) in dem Innenrand (7) des Bremsbands (5) auszubilden, wobei in der geschlossenen Konfiguration des Formwerkzeugs (4) die Formungselemente (32) entlang der Achse (X) durch ein erstes und ein zweites axiales Ende (38, 40) begrenzt sind, worin die Pressflächen (10A, 12A) mit einem Abstand entlang der Achse (X) angeordnet sind, der im Wesentlichen gleich der letztendlichen Dicke des Bremsbands (5) ist, wobei nur eines der ersten und zweiten axialen Enden (38, 40) der Formungselemente in den Formhohlraum (24) vorsteht und mit den Pressflächen (10A, 12A) zusammenwirkt, um das Bremsband (5) zu formen.

2. Formwerkzeug nach Anspruch 1, worin sich die Formungselemente (32) von der inneren Seitenwand (28) über eine Länge erstrecken, die kleiner ist als der Abstand zwischen dem Innenrand (7) und dem Außenrand (8).

3. Formwerkzeug nach Anspruch 1 oder 2, worin in einer geschlossenen Konfiguration des Formwerkzeugs (4) eine Dicke der Formungselemente (32) gemessen entlang der Achse (X) größer ist als der Abstand zwischen den Pressflächen (10A, 12A) der zwei Halbschalen (10, 12).

4. Formwerkzeug nach einem der vorhergehenden Ansprüche, worin in einer geschlossenen Konfiguration des Formwerkzeugs (4) die Formungselemente (32) den Formhohlraum (24) nur teilweise axial durchsetzen, um einen Unterschnitt in dem entsprechenden Bremsband (5) zu erzeugen,
und/oder worin
in einem geschlossenen Zustand des Formwerkzeugs (4) die Formungselemente (32) in einen axialen Abschnitt des Bremsbands (5) einschneiden, der entlang der Achse (X) kleiner ist als die letztendliche Dicke des Bremsbands (5), derart, dass ein Bremsband (5) erzeugt wird, worin eine Umfangsplatte (42) vorhanden ist, die in Bezug auf die Vertiefungen (36), die durch die Formungselemente (32) am Innenrand (7) der Platte (6A) erzeugt werden, im Wesentlichen vorsteht, wobei die Umfangsplatte (42) eine axiale Dicke hat, die im Wesentlichen gleich der Differenz zwischen der letztendlichen Dicke des Bremsbands (5) und dem axialen Abschnitt der Formungselemente (32) ist, die in das Bremsband (5) einschneiden,
und/oder worin
die Formungselemente (32) in einer geschlossenen Konfiguration des Formwerkzeugs (4) in einen axialen Abschnitt des Bremsbands (5) einschneiden, der entlang der Achse (X) im Wesentlichen gleich einer Platte (6B) und den Belüftungskanälen (9) ist, derart, dass ein Bremsband (5) erzeugt wird, worin die Platte (6A), die durch die Formungselemente (32) nicht beeinflusst wird, entlang dem Innenrand (7) eine Umfangsplatte (42) aufweist, die von den Vertiefungen (36) der gegenüberliegenden Platte (6B), die durch die Formungselemente (32) beeinflusst wird, im Wesentlichen weg vorsteht.

5. Formwerkzeug nach Anspruch 4, worin ein ringförmiger Abschnitt einer Nabe, die dem Bremsband (5) zugeordnet ist, sich gegen die Umfangsplatte (42) abstützt, wobei die Nabe das Bremsband (5) mit einer Radnabe drehfest verbindet.

6. Formwerkzeug nach einem der vorhergehenden Ansprüche, worin die Formungselemente (32) aus einem Stück mit der inneren Seitenwand (28) sind, und/oder worin
die Formungselemente (32) der inneren Seitenwand (28) zugeordnet sind, und/oder worin
die Formungselemente (32) Trägerelemente für zumindest einen Kern (54) aufweisen, der in der Lage ist, einen Belüftungskanal (9) zu erzeugen, der sich von dem Außenrand (8) zum Innenrand (7) des Bremsbands (5) erstreckt.

7. Formwerkzeug nach einem der vorhergehenden Ansprüche, worin zumindest ein Formungselement (32) ein Gehäuse (58) aufweist, um einen Abschnitt zumindest eines Kerns (54) aufzunehmen, der sich vom Außenrand (8) zum Innenrand (7) erstreckt, um in dem Bremsband (5) einen Belüftungskanal (9) zu erzeugen, und/oder worin zumindest ein Formungselement (32) zumindest ein Gehäuse (28) aufweist, wobei jedes Gehäuse einen Abschnitt des Kerns (54) aufnimmt, der sich vom Außenrand (8) zum Innenrand (7) erstreckt, um in dem Bremsband (5) Belüftungskanäle (9) zu formen.

8. Formwerkzeug nach Anspruch 7, worin das Gehäuse (58) in Bezug auf die Achse (X) im Wesentlichen radial angeordnet ist, und/oder worin das Gehäuse (58) im Wesentlichen in einer Richtung angeordnet ist, die mit der Achse (X) nicht übereinstimmt.

9. Formwerkzeug nach einem der vorhergehenden Ansprüche, worin die Halbschalen (10, 12) eine im Wesentlichen ringförmige Gestalt haben, mit einem Außenumfang (13) entsprechend dem Außenrand (8) und einem Innenumfang (14) entsprechend dem Innenrand (7).

10. Formwerkzeug nach Anspruch 9, worin der Innenumfang (4) von einer der Halbschalen (10, 12) mit einer Gestalt geformt ist, die der inneren Seitenwand (28) und den Formungselementen (32) der inneren Aufnahmemittel (16) komplementär ist.

11. Formwerkzeug nach einem der vorhergehenden Ansprüche, worin die Formungselemente (32) im Wesentlichen gleichmäßig mit konstantem Abstand entlang der inneren Seitenwand (28) verteilt sind und/oder worin die Formungselemente (32) im Wesentlichen einen segmentierten Querschnitt in Bezug auf eine Schnittebene senkrecht zu der Achse (X) haben und/oder worin
die Formungselemente (32) einen im Wesentlichen polygonalen Querschnitt in Bezug auf eine Schnittebene senkrecht zu der Achse (X) haben.

12. Formwerkzeug nach einem der vorhergehenden Ansprüche, das Kerne (54) zur Herstellung von Belüftungskanälen (9) aufweist, wobei die Kerne (54) dazu geeignet sind, abwechselnd von einer Ruhestellung, worin sie sich mit dem Formhohlraum (24) nicht stören, und einer Arbeitsstellung, in der sie in den Formhohlraum (24) einschneiden, überführt zu werden, und/oder worin
die Kerne (54) ein Hinterende (62) und ein Vorderende (66) aufweisen, das in Bezug auf das Hinterende (62) verjüngt ist, wobei das Hinterende (62) in der Arbeitsstellung am Außenrand (8) angeordnet ist und das Vorderende (66) am Innenrand (7) angeordnet ist, um eine Bewegung der Kerne (54) von der Ruhestellung zur Arbeitsstellung und umgekehrt zu begünstigen, und/oder worin
in der Arbeitsstellung die Kerne (54) in den Formhohlraum (24) eingesetzt sind, sich von den äußeren Aufnahmemitteln (20) zu den inneren Aufnahmemitteln (16) erstrecken und mit im Wesentlichen konstantem Abstand in Umfangsrichtung des Formhohlraums (24) verteilt sind, und/oder worin
die Kerne (54) im Wesentlichen gerade sind und radial in Bezug auf die Achse (X) angeordnet sind, im Wesentlichen gerade und radiale Belüftungskanäle (9) in dem Bremsband (5) bilden, und/oder worin die Kerne (54) sich im Wesentlichen gerade und in einer schrägen Richtung in Bezug auf die radiale Richtung der Achse (X) erstrecken und in dem Bremsband (5) Belüftungskanäle (9) bilden, die im Wesentlichen gerade und in Bezug auf die radiale Richtung zur Achse (X) schräg sind, und/oder worin
die Kerne (54) eine im Wesentlichen gekrümmte Form haben, welche in dem Bremsband (5) gekrümmte Belüftungskanäle (9) bilden, und/oder worin
die Kerne (54) einen Transversalquerschnitt haben, der vom Außenrand (8) zum Innenrand (7) verjüngt ist, derart, um Belüftungskanäle (9) zu bilden, die vom Außenrand (8) zum Innenrand (7) verjüngt sind, und/oder worin am Vorderende (66) die Kerne (54) einen Stift (70) aufweisen, der in den Gehäusen (58) der Formungselemente (32) der inneren Aufnahmemittel (16) aufgenommen ist.

13. Formwerkzeug nach einem der vorhergehenden Ansprüche, worin die äußeren Aufnahmemittel (20) Öffnungen (78) entlang einer äußeren Seitenwand (74) aufweisen, die dazu geeignet ist, von den Kernen (54) traversiert zu werden, um die Kerne (54) aus der Arbeitsstellung zur Ruhestellung zu bewegen.

14. Formwerkzeug nach einem der vorhergehenden Ansprüche, das ein Rückhalteelement (80) aufweist, welches zusammen mit dem äußeren Aufnahmemitteln (20) die Wirkung hat, die Kerne (54) in der Arbeitsstellung zu halten, und/oder worin
das Rückhalteelement (80) einen Umfangsring (84) aufweist, der die äußeren Aufnahmemittel (20) umgibt und Löcher (88) aufweist, die eine Sperrverbindung mit den hinteren Enden (62) der Kerne (54) herzustellen, und/oder worin
die inneren Aufnahmemittel (16) mit Aktivierungsmitteln betriebsmäßig verbunden sind, welche die inneren Aufnahmemittel (16) entlang der Achse (X) bewegen, und/oder worin die äußeren Aufnahmemittel (20) mit Aktivierungsmitteln betriebsmäßig verbunden sind, um die äußeren Aufnahmemittel (20) entlang der Achse (X) zu bewegen.

15. Formwerkzeug nach einem der vorhergehenden Ansprüche, das aus Aluminium oder Aluminiumlegierungen hergestellt ist und/oder Heizmittel aufweist und/oder worin die Heizmittel elektrische Widerstände aufweisen.

16. Formwerkzeug nach einem der Ansprüche von 1 bis 15, worin die Formungselemente (32) einen Abschnitt mit einer Dimension haben, die in Richtung der Achse (X) bestimmt ist, welche, in einer geschlossenen Konfiguration des Formwerkzeugs (4), innerhalb der Gesamtdicke des herzustellenden Bremsbands (5) um einen Betrag eindringt, der kleiner als der Abstand zwischen den Pressflächen (10A, 12A) der zwei Halbschalen (10, 12) ist.

17. Verfahren zur Herstellung eines Bremsbands (5) aus Verbundmaterial mit Belüftungskanälen (9), welches die Schritte aufweist:
- Bereitstellen eines Formwerkzeugs (4) nach einem der Ansprüche 1 bis 16, wobei das Formwerkzeug (4) mit Kernen (54) versehen ist, die ausgestaltet sind, um Belüftungskanäle (9) herzustellen,
- Füllen des Innenraums des Formhohlraums (24) des Formwerkzeugs (4) mit einem Gemisch aus Verbundmaterial bis zu der Position der Kerne (54), die zur Herstellung der Belüftungskanäle (9) ausgestaltet sind,
- Überführen der Kerne (54) von der Ruhestellung zur Arbeitsstellung,
- Positionieren eines Rückhalteelements (80, 84) für die Kerne (54),
- weiteres Füllen des Innenraums des Formhohlraums (24) mit dem Gemisch des Verbundmaterials,
- Schließen des Formwerkzeugs (4),
- Formen des Bremsbands (5) durch Ausüben eines vorbestimmten Drucks und einer vorbestimmten Temperatur,
- Auswerfen des Bremsbands (5) aus dem Formwerkzeug (4).

18. Verfahren nach Anspruch 17, das auch den Schritt der Pyrolyse des Bremsbands (5) aufweist, und/oder das den Schritt einer Silicifizierung des Bremsbands (5) aufweist und/oder das einen oder mehrere Schritte der mechanischen Endbearbeitung der Außenoberflächen des Bremsbands (5) aufweist.

## Revendications

1. Moule (4) pour former des bandes de freinage (5) de matériau composite ayant deux plaques de rotor (6A, 6B) ayant un axe prédéterminé (X), lesdites plaques (6A, 6B) ayant un bord radialement interne (7) et un bord externe (8), ayant un épaisseur prédéterminée et étant séparés l'un de l'autre par des conduits de ventilation (9) qui s'étendent à partir du bord externe (8) jusqu'au bord interne (7), ledit moule (4) comprenant :
une demi-coque supérieure (10) et une demi-coque inférieure (12), chacune desdites demi-coques (10, 12) ayant une surface d'impression (10A, 12A), lesdites surfaces d'impression (10A, 12A) se faisant face et étant sensiblement perpendiculaires par rapport audit axe (X), au moins l'une desdites demi-coques (10, 12) étant appropriée pour être déplacée par des moyens d'actionnement correspondants le long dudit axe (X) vers l'autre demi-coque (12, 10) respectivement,
des moyens de confinement internes (16) et externes (20) appropriés pour délimiter le bord interne (7) et le bord externe (8) respectivement de la bande de freinage (5), lesdits moyens de confinement internes et externes (16, 20) délimitant conjointement avec les demi-coques (10, 12), une cavité de formage (24) ayant la forme de la bande de freinage (5) qui doit être formée, dans lequel :
lesdits moyens de confinement internes (16) comprennent une paroi latérale interne (28) délimitant ledit bord interne (7) et des éléments de façonnage (32) positionnés de manière circonférentielle le long de ladite paroi latérale interne (28), qui font saillie à l'extérieur à partir de la paroi latérale interne (28) perpendiculairement audit axe (X) afin de former des évidements (36) correspondants dans le bord interne (7) de la bande de freinage (5), lesdits éléments de façonnage (32) étant délimités le long de l'axe (X) par une première et une seconde extrémité axiale (38, 40) dans la configuration dans laquelle le moule (4) est fermé, dans lequel lesdits surfaces d'impression (10A, 12A) sont à une certaine distance le long de l'axe (X) qui est sensiblement égale à l'épaisseur définitive de la bande de freinage (5), une seule desdites première et seconde extrémités axiales (38, 40) desdits éléments de façonnage (32) fait saillie à l'intérieur de la cavité de formage (24) et agit conjointement avec lesdites surfaces d'impression (10A, 12A) afin de former ladite bande de freinage (5).

2. Moule selon la revendication 1, dans lequel lesdits éléments de façonnage (32) s'étendent à partir de ladite paroi latérale interne (28) sur une longueur inférieure à la distance située entre ledit bord interne (7) et ledit bord externe (8).

3. Moule selon les revendications 1 ou 2, dans lequel une épaisseur desdits éléments de façonnage (32) mesurée le long de l'axe (X) est supérieure à la distance située entre les surfaces d'impression (10A, 12A) des deux demi-coques (10, 12) dans une configuration dans laquelle le moule (4) est fermé.

4. Moule selon l'une quelconque des revendications précédentes, dans lequel lesdits éléments de façonnage (32) dans une configuration dans laquelle le moule (4) est fermé de manière axiale, pénètrent dans la cavité de formage (24) uniquement partiellement, afin de créer un dégagement dans la bande de freinage (5) correspondante et/ou dans lequel :
lesdits éléments de façonnage (32), dans une condition dans laquelle le moule (4) est fermé, coupent dans une partie axiale de la bande de freinage (5) qui est inférieure à l'épaisseur définitive de la bande de freinage (5) le long de l'axe (X), afin de produire une bande de freinage (5) dans laquelle on trouve une plaque circonférentielle (42) qui fait sensiblement saillie par rapport aux évidements (36) produits par les éléments de façonnage (32) sur le bord interne (7) d'une plaque (6A), ladite plaque circonférentielle (42) ayant une épaisseur axiale sensiblement égale à la différence entre l'épaisseur définitive de la bande de freinage (5) et la partie axiale des éléments de façonnage (32) qui coupent dans la bande de freinage (5) et/ou dans lequel lesdits éléments de façonnage (32), dans une configuration dans laquelle le moule (4) est fermé, coupent dans une partie axiale de la bande de freinage (5) qui est sensiblement égale à une plaque (6B) et aux conduits de ventilation (9) le long de l'axe (X) afin de produire une bande de freinage (5) dans laquelle la plaque (6A) qui n'est pas affectée par lesdits éléments de façonnage (32), a le long du bord interne (7), une plaque circonférentielle (42) qui fait sensiblement saillie à distance des évidements (36) de la plaque (6B) opposée affectée par les éléments de façonnage (32).

5. Moule selon la revendication 4, dans lequel une partie annulaire d'un moyeu qui est associée avec ladite bande de freinage (5) vient en butée contre ladite plaque circonférentielle (42), ledit moyeu raccordant de manière ferme en rotation, la bande de freinage (5) avec un moyeu de roue.

6. Moule selon l'une quelconque des revendications précédentes, dans lequel lesdits éléments de façonnage (32) sont d'un seul tenant, avec ladite paroi latérale interne (28), et/ou dans lequel :
ledit élément de façonnage (32) est associé avec la paroi latérale interne (28), et/ou dans lequel :
lesdits éléments de façonnage (32) comprennent des éléments de support pour au moins un noyau (54) pouvant produire un conduit de ventilation (9) qui s'étend à partir du bord externe (8) jusqu'au bord interne (7) de la bande de freinage (5).

7. Moule selon l'une quelconque des revendications précédentes, dans lequel au moins un élément de façonnage (32) comprend un boitier (58) pour recevoir une partie d'au moins un noyau (54) qui s'étend à partir du bord externe (8) jusqu'au bord interne (7) pour fournir un conduit de ventilation (9) dans la bande de freinage (5), et/ou dans lequel :
au moins un élément de façonnage (32) comprend au moins un boitier (58), chaque boitier recevant une partie du noyau (54) qui s'étend à partir du bord externe (8) jusqu'au bord interne (7) afin de former des conduits de ventilation (9) dans la bande de freinage (5).

8. Moule selon la revendication 7, dans lequel ledit boitier (58) est positionné de manière sensiblement radiale par rapport audit axe (X), et/ou, dans lequel :
ledit boitier (58) est positionné sensiblement dans une direction qui ne coïncide pas avec ledit axe (X).

9. Moule selon l'une quelconque des revendications précédentes, dans lequel lesdites demi-coques (10, 12) ont une forme sensiblement annulaire avec un périphérie externe (13) correspondant audit bord externe (8) et une périphérie interne (14) correspondant audit bord interne (7).

10. Moule selon la revendication 9, dans lequel la périphérie interne (14) de l'une desdites demi-coques (10, 12) est formée avec une forme complémentaire de ladite paroi latérale interne (28) et lesdits éléments de façonnage (32) des moyens de confinement internes (16).

11. Moule selon l'une quelconque des revendications précédentes, dans lequel lesdits éléments de façonnage (32) sont répartis de manière sensiblement uniforme avec un espacement constant le long de ladite paroi latérale interne (28) et/ou dans lequel :
lesdits éléments de façonnage (32) ont sensiblement une section transversale segmentée par rapport à un plan de section perpendiculaire audit axe (X), et/ou, dans lequel :
lesdits éléments de façonnage (32) ont une section transversale sensiblement polygonale par rapport à un plan de section perpendiculaire audit axe (X).

12. Moule selon l'une quelconque des revendications précédentes, comprenant des noyaux (54) pour produire des conduits de ventilation (9), lesdits noyaux (54) étant appropriés pour être transférés de manière alternée, d'une position de repos dans laquelle ils n'interfèrent pas avec ladite cavité de formage (24) et une position de travail dans laquelle ils coupent dans ladite cavité de formage (24), et/ou dans lequel :
lesdits noyaux (54) ont une extrémité postérieure (62) et une extrémité antérieure (66) qui est progressivement rétrécie par rapport à l'extrémité postérieure (62), ladite extrémité postérieure (62) étant positionnée dans la position de travail au niveau du bord externe (8) et ladite extrémité antérieure (66) étant positionnée au niveau du bord interne (7) afin de favoriser le déplacement des noyaux (54) de la position de repos à la position de travail et vice versa, et/ou dans lequel :
dans la position de travail, les noyaux (54) sont insérés dans la cavité de formage (24), s'étendant à partir des moyens de confinement externes (20) jusqu'aux moyens de confinement internes (16), et sont répartis avec un espacement sensiblement constant dans une direction circonférentielle de ladite cavité de formage (24), et/ou dans lequel : lesdits noyaux (54) sont sensiblement droits et positionnés de manière radiale par rapport audit axe (X), formant des conduits de ventilation (9) sensiblement droits et radiaux dans la bande de freinage (5), et/ou dans lequel :
lesdits noyaux (54) s'étendent dans une direction sensiblement droite et inclinée par rapport à la direction radiale à l'axe (X), formant des conduits de ventilation (9) qui sont sensiblement droits et inclinés par rapport à la direction radiale à l'axe (X) dans la bande de freinage (5), et/ou dans lequel :
lesdits noyaux (54) ont une forme sensiblement incurvée, formant des conduits de ventilation (9) incurvés dans la bande freinage (5), et/ou dans lequel :
lesdits noyaux (54) ont une section transversale qui se rétrécit progressivement à partir du bord externe (8) jusqu'au bord interne (7) afin de former des conduits de ventilation (9) qui se rétrécissent du bord externe (8) jusqu'au bord interne (7), et/ou dans lequel :
dans ladite extrémité antérieure (66), lesdits noyaux (54) comprennent une broche (70) qui est logée dans lesdits boitiers (58) des éléments de façonnage (32) des moyens de confinement internes (16).

13. Moule selon l'une quelconque des revendications précédentes, dans lequel lesdits moyens de confinement externes (20) comprennent des ouvertures (78) le long d'une paroi latérale externe (74) appropriée pour être traversée par lesdits noyaux (54) afin de déplacer les noyaux (54) de la position de travail à la position de repos.

14. Moule selon l'une quelconque des revendications précédentes, comprenant un élément de retenue (80) agissant conjointement avec lesdits moyens de confinement externes (20) pour maintenir lesdits noyaux (54) dans la position de travail, et/ou dans lequel :
ledit élément de retenue (80) comprend une bague circonférentielle (84) entourant lesdits moyens de confinement externes (20) et ayant des trous (88) fournissant un raccordement de verrouillage avec lesdites extrémités postérieures (62) des noyaux (54), et/ou dans lequel :
lesdits moyens de confinement internes (16) sont raccordés de manière opérationnelle pour actionner des moyens déplaçant lesdits moyens de confinement internes (16) le long de l'axe (X), et/ou dans lequel lesdits moyens de confinement externes (20) sont raccordés de manière opérationnelle pour activer des moyens pour déplacer lesdits moyens de confinement externes (20) le long de l'axe (X).

15. Moule selon l'une quelconque des revendications précédentes, réalisé à partir d'aluminium ou d'alliages d'aluminium et/ou comprenant des moyens de chauffage, et/ou dans lequel :
lesdits moyens de chauffage comprennent des résistances électriques.

16. Moule selon l'une quelconque des revendications 1 à 15, dans lequel lesdits éléments de façonnage (32) ont une partie avec une dimension déterminée dans la direction de l'axe (X) pénétrant à l'intérieur de toute l'épaisseur de la bande de freinage (5) à fabriquer selon une quantité inférieure à la distance entre les surfaces d'impression (10A, 12A) des deux demi-coques (10, 12) dans une configuration dans laquelle le moule (4) est fermé.

17. Procédé pour fabriquer une bande de freinage (5) de matériau composite et ayant des conduits de ventilation (9) comprenant les étapes consistant à :
prévoir un moule (4) selon l'une quelconque des revendications 1 à 16, ledit moule (4) étant prévu avec des noyaux (54) conçus pour produire des conduits de ventilation (9),
remplir l'intérieur de la cavité de formage (24) du moule (4) avec un mélange d'un matériau composite jusqu'à la position desdits noyaux (54) conçus pour produire des conduits de ventilation (9),
transférer les noyaux (54) de la position de repos à la position de travail,
positionner un élément de retenue (80, 84) pour les noyaux (54),
continuer à remplir l'intérieur de la cavité de formage (24) avec le mélange de matériau composite,
fermer le moule (4),
former ladite bande de freinage (5) en appliquant une pression et une température prédéterminées,
expulser la bande de freinage (5) du moule (4).

18. Procédé selon la revendication 17, comprenant également l'étape consistant à pyrolyser la bande de freinage (5), et/ou comprenant l'étape consistant à silicifier la bande de freinage (5), et/ou
comprend une ou plusieurs étapes consistant à finir mécaniquement les surfaces externes de la bande de freinage (5).
